# EUROPEAN PATENT SPECIFICATION

(11) **EP 2 889 207 B1**
(45) Date of publication and mention of the grant of the patent: **17.08.2016**
(21) Application number: 14169185.7
(22) Date of filing: 21.05.2014
(51) Int. Cl.: B62J 6/00, B62J 17/06

(54) **Motorcycle**
Motorrad
Motocyclette

(30) Priority: 25.12.2013 JP 2013267464
(43) Date of publication of application: 01.07.2015
(73) Proprietor: Yamaha Hatsudoki Kabushiki Kaisha, Iwata-shi, Shizuoka 438-8501 (JP)
(72) Inventor: Nakamura, Satoshi, Iwata-shi, Shizuoka 438-8501 (JP)
(74) Representative: Grünecker Patent- und Rechtsanwälte PartG mbB

(56) References cited:
- EP-A1- 2 311 717
- EP-A1- 2 371 688
- US-A- 4 887 688
- US-A1- 2010 001 551

## Description

The present invention relates to a motorcycles according to the preamble of independent claim 1. Such a motorcycle can be taken from the prior art document US 2010/0001551 A1.

Prior art document EP 2 371 688 A1 discloses a motorcycle cowl structure for suppressing running-air flowing toward a rider sitting on a rider seat and a pillion passenger sitting on a pillion passenger seat has left and right cowl main body portions adapted to prevent running-air from hitting the knee portions, thighs, waist and/or flanks of the rider, and left and right movable cowl portions provided on the respective left and right cowl main body portions. The movable cowl portions can be spread outwardly if a pillion passenger is also riding, to prevent running-air from hitting the knee portions, thighs, waist and/or flanks of the pillion passenger.

A motorcycle that has a front cover and a side cover has conventionally been known. Providing the front cover and the side cover can reduce aerodynamic drag of the motorcycle. It also prevents the rider from being hit strongly by the flow of the air (hereinafter referred to as "airflow") that flows from the front to the rear as the motorcycle runs. The front cover is positioned in front of a head pipe, and the side cover is positioned at a side of the head pipe. WO/2010/137621 describes a motorcycle having a first side cover and a second side cover disposed widthwise outward of the first side cover.

In the motorcycle disclosed in WO/2010/137621, an opening extending in a vehicle longitudinal direction, which serves as the passage for the airflow, is formed between the first side cover and the second side cover. The airflow is guided through the opening toward the rear. The airflow that has passed through the opening merges with the airflow flowing outside the second side cover.

In the motorcycle disclosed in WO/2010/137621, an air guide member is disposed below the first side cover and the second side cover. When the rider is on the motorcycle, the legs of the rider are positioned behind the air guide member. In the above-described motorcycle, a flasher lamp extending laterally is fitted to the air guide member. Because the airflow hits the flasher lamp from the front of the flasher lamp, the airflow becomes turbulent at the rear of the flasher lamp. The turbulent airflow hits the rider's legs directly, leading to less riding comfort than in the case where there is no turbulence in the airflow.

On the other hand, when the flasher lamp is fitted to the second side cover, the turbulent airflow does not hit the rider's legs easily. However, the second side cover is disposed laterally outward of the first side cover. For this reason, when the flasher lamp is fitted to the second side cover, the size of the motorcycle becomes greater in terms of width.

The present invention has been accomplished in view of the foregoing and other problems, and it is an object of the invention to, provide a motorcycle that can prevent the motorcycle from increasing in width and can also improve riding comfort.

According to the present invention said object is solved by a motorcycle having the features of independent claim 1. Preferred embodiments are laid down in the dependent claims.

Accordingly, it is provided a motorcycle comprising: a head pipe; a body frame extending rearward from the head pipe; a seat, positioned behind the head pipe, for a rider to sit on; a first side cover disposed laterally outward of the head pipe; a second side cover comprising a vertical portion extending downward and overlapping the first side cover as viewed from one side of the motorcycle, the second side cover disposed laterally outward of the first side cover; a flasher lamp mounted to the first side cover at a position that is frontward relative to the vertical portion and at which the first side cover and the second side cover do not overlap each other as viewed from one side of the motorcycle, at least a portion of the flasher lamp being disposed laterally outward of the second side cover as viewed from the front of the motorcycle; a step, positioned downward relative to the seat and rearward relative to the second side cover, on which a foot of the rider is to be placed; and an airflow passage, formed between the first side cover and the vertical portion, for passing airflow therethrough, wherein the flasher lamp is positioned in front of the airflow passage.

In the motorcycle according to the present teaching, the flasher lamp is mounted at a position that is frontward relative to the vertical portion and in the first side cover at which the first side cover and the second side cover do not overlap as viewed from one side of the motorcycle. At least a portion of the flasher lamp is positioned laterally outward of the second side cover as viewed from the front of the motorcycle. This means that the airflow hits the flasher lamp, causing turbulence in the airflow at the rear of the flasher lamp. In the present teaching, the flasher lamp is positioned in front of the airflow passage formed between the first side cover and the vertical portion. Therefore, the turbulent airflow that is caused at the rear of the flasher lamp is guided into the airflow passage. The turbulent airflow is controlled while passing through the airflow passage. Thus, the controlled airflow, not the turbulent airflow, hits the rider's legs. As a result, riding comfort can be improved. Moreover, the flasher lamp is fitted to the first side cover, which is disposed laterally inward relative to the second side cover. As a result, the width of the motorcycle can be kept less than that in the case where the flasher lamp is fitted to the second side cover.

In another preferred embodiment of the present teaching, the motorcycle further comprises an engine positioned behind the head pipe and supported by the body frame, and wherein: the engine is positioned laterally inward relative to the vertical portion; and a rear portion of the vertical portion extends laterally inward in a horizontal cross-sectional plane across the vertical portion.

In the above-described preferred embodiment, the airflow that has been controlled while passing through the airflow passage hits the rear portion of the vertical portion. Since the rear portion of the vertical portion extends laterally inward as viewed in plan of the motorcycle, the controlled airflow is guided laterally inward. This serves to reduce the airflow that hits the rider's legs and to improve the riding comfort. In addition, the controlled airflow is guided to the engine, which is positioned laterally inward relative to the vertical portion. As a result, the engine can be cooled.

In another preferred embodiment of the present teaching, a rear end of the vertical portion is positioned laterally inward relative to a front end of the vertical portion.

In the above-described preferred embodiment, a greater volume of airflow can be guided into the airflow passage. As a result, a greater volume of airflow can be guided to the engine, so the cooling performance for the engine can be improved.

In another preferred embodiment of the present teaching, the engine comprises a crankcase, a cylinder body extending upward from the crankcase, and a cylinder head joined to the cylinder body, and a lower end of the vertical portion is positioned downward relative to a lower end of the cylinder head.

In the above-described preferred embodiment, the vertical length of the airflow passage is made relatively long. This allows a greater volume of airflow to pass through the airflow passage. As a result, a greater volume of airflow can be guided to the engine, so the cooling performance for the engine can be improved.

In another preferred embodiment of the present teaching, the vertical portion overlaps a portion of the body frame that is positioned in front of the engine as viewed from one side of the motorcycle.

In the above-described preferred embodiment, the length of the airflow passage along the vehicle longitudinal direction is made relatively long. As a result, the airflow passing through the airflow passage is controlled more reliably. The controlled airflow is guided to the engine, so that it can cool the engine.

In another preferred embodiment of the present teaching, the first side cover further includes another vertical portion overlapping the foregoing vertical portion as viewed from one side of the motorcycle, and the foregoing vertical portion includes a rear end positioned rearward relative to a rear end of the other vertical portion.

In the above-described preferred embodiment, the airflow that has hit the rear portion of the vertical portion of the second side cover is guided laterally inward more reliably. This can reduce the airflow that hits the rider's legs. Moreover, because the airflow can be guided to the engine more reliably, the cooling performance for the engine can be improved.

In another preferred embodiment of the present teaching, the other vertical portion includes a protruding portion protruding laterally outward and extending in a vehicle longitudinal direction, and at least a portion of the protruding portion overlaps the vertical portion as viewed from one side of the motorcycle.

In the above-described preferred embodiment, the turbulent airflow that is caused at the rear of the flasher lamp is controlled by the protruding portion positioned in the airflow passage. This allows the controlled airflow to hit the rider's legs and improves the riding comfort.

In another preferred embodiment of the present teaching, a rear end of the vertical portion is positioned laterally inward relative to a laterally outermost end of the protruding portion.

In the above-described preferred embodiment, the airflow that has been controlled by the protruding portion is guided laterally inward. As a result, the airflow that hits the rider's legs can be reduced. The riding comfort can also be improved.

In another preferred embodiment of the present teaching, the motorcycle further comprises a body cover disposed laterally inward of the step, and wherein the vertical portion is positioned laterally outward relative to the body cover in a horizontal cross-sectional plane across the vertical portion and the body cover.

In the above-described preferred embodiment, the body cover is positioned laterally inward relative to the vertical portion of the second side cover. As a result, the airflow passing along the region laterally outward of the vertical portion does not hit the rider's legs easily.

In another preferred embodiment of the present teaching, in a horizontal cross-sectional plane across the other vertical portion and the body cover, at least a portion of the other vertical portion is positioned laterally inward relative to a laterally outermost end of the body cover.

In the above-described preferred embodiment, at least a portion of the other vertical portion of the first side cover is positioned laterally inward relative to a laterally outermost end of the body cover. This allows the airflow passing through the airflow passage to be guided laterally inward. As a result, the airflow does not hit the rider's legs easily.

In another preferred embodiment of the present teaching, a front portion of the vertical portion extends laterally more inwardly toward its front in a horizontal cross-sectional plane across the vertical portion.

In the above-described preferred embodiment, the airflow that flows from the front of the vertical portion of the second side cover toward the vertical portion hits the front portion of the vertical portion. The front portion of the vertical portion extends laterally more inwardly toward its front. For this reason, the airflow that has hit the front portion of the vertical portion flows laterally inward, that is, not toward the first side cover but outward of the vertical portion, in other words, in the laterally opposite direction to the first side cover. This can reduce the airflow that hits the rider's legs.

In another preferred embodiment of the present teaching, the flasher lamp comprises a lamp unit and a coupling unit disposed between the lamp unit and the first side cover and coupling the lamp unit and the first side cover to each other, the coupling unit is bendable, and when the coupling unit is bent, the lamp unit is positioned laterally inward relative to a laterally outermost end of the second side cover as viewed from the front of the motorcycle.

With the above-described preferred embodiment, the coupling unit can bend when a sideward force is applied to the motorcycle. As the coupling unit is bent, the lamp unit can be positioned laterally inward relative to the laterally outermost end of the second side cover. Therefore, the sideward force is distributed over the second side cover, and the force applied to the flasher lamp is reduced. This can prevent the lamp unit from damages.

### ADVANTAGEOUS EFFECTS OF INVENTION

As described above, the present invention makes it possible to provide a motorcycle that can prevent its size from increasing in width and can also improve riding comfort.

### BRIEF DESCRIPTION OF DRAWINGS

Fig. 1 is a left side view illustrating a motorcycle according to one embodiment of the present teaching.
Fig. 2 is a front view illustrating the motorcycle according to one embodiment of the present teaching.
Fig. 3 is a cross-sectional view taken along line III-III in Fig. 1.
Fig. 4 is a left side view illustrating a portion of the motorcycle according to one embodiment of the present teaching.
Fig. 5 is a cross-sectional view taken along line V-V in Fig. 1.
Fig. 6 is a left side view illustrating a portion of the motorcycle according to one embodiment of the present teaching.
Fig. 7 is a cross-sectional view taken along line VII-VII in Fig. 1.
Fig. 8 is a front view illustrating a portion of the motorcycle according to one embodiment of the present teaching.

### DESCRIPTION OF EMBODIMENTS

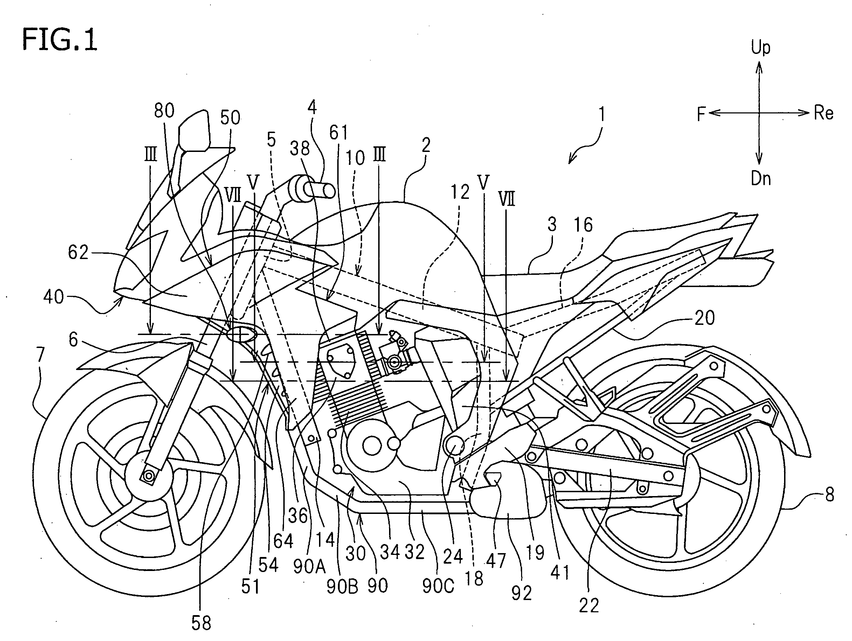

Hereinbelow, preferred embodiments of the present teaching will be described. As illustrated in Fig. 1, a motorcycle 1 according to the present preferred embodiment is an on-road type motorcycle 1. It should be noted, however, that the motorcycle according to the present teaching is not limited to the on-road type motorcycle 1. The motorcycle according to the present teaching may be any other type of motorcycle, such as a moped type motorcycle, an off-road type motorcycle, or a scooter type motorcycle.

In the following description, the terms "front," "rear," "left," "right," "up," and "down" respectively refer to front, rear, left, right, up, and down as defined based on the perspective of the rider seated on the seat 3 of the motorcycle 1, unless specifically indicated otherwise. The terms "above/up" and "below/down" respectively mean the relative vertical positions above/up and below/down as used when the motorcycle 1 is stationary on a horizontal plane. The term "lateral" means extending in a side to side orientation. Reference characters F, Re, L, R, Up, and Dn in the drawings indicate front, rear, left, right, up, and down, respectively.

As illustrated in Fig. 1, the motorcycle 1 has a head pipe 5 and a body frame 10 secured to the head pipe 5. The body frame 10 extends rearward from the head pipe 5. The body frame 10 has a main frame 12, a first down frame 14 extending downward from the head pipe 5, a seat frame 16 extending rearward from a rear portion of the main frame 12, a second down frame 18 extending downward from a rear portion of the main frame 12, and a backstay 20 extending rearward from the second down frame 18 and connecting the second down frame 18 and the seat frame 16. The main frame 12 extends rearward and obliquely downward from the head pipe 5. The first down frame 14 is positioned below the main frame 12 and extends rearward and obliquely downward from the head pipe 5. The second down frame 18 extends rearward and obliquely downward from the main frame 12. The seat frame 16 extends rearward and obliquely upward from the main frame 12. The backstay 20 is positioned below the seat frame 16 and extends rearward and obliquely upward from the second down frame 18.

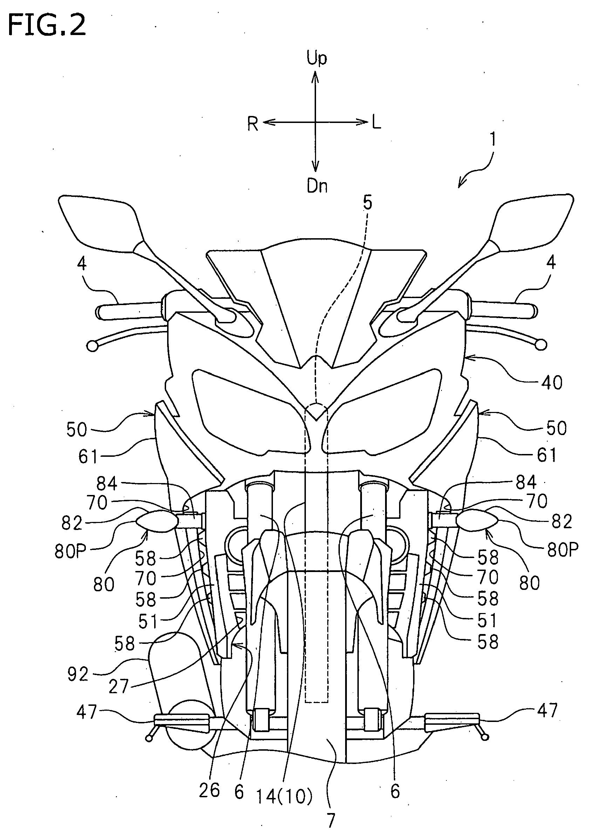

A steering shaft (not shown) is supported by the head pipe 5. A handlebar 4 is provided on an upper portion of the steering shaft. A front fork 6 is provided on a lower portion of the steering shaft. A front wheel 7 is supported rotatably at the lower end of the front fork 6. A front cover 40 is disposed in front of the head pipe 5. As illustrated in Fig. 2, left and right side covers 50 are disposed at the respective sides of the head pipe 5. The left side cover 50 is disposed to the left of the head pipe 5. The right side cover 50 is disposed to the right of the head pipe 5. An air shroud 26 is disposed downward of the head pipe 5. Part of the airflow passes through a gap 27 formed in the air shroud 26 and flows toward the rear of the motorcycle. The air shroud 26 is disposed between the left and right side covers 50.

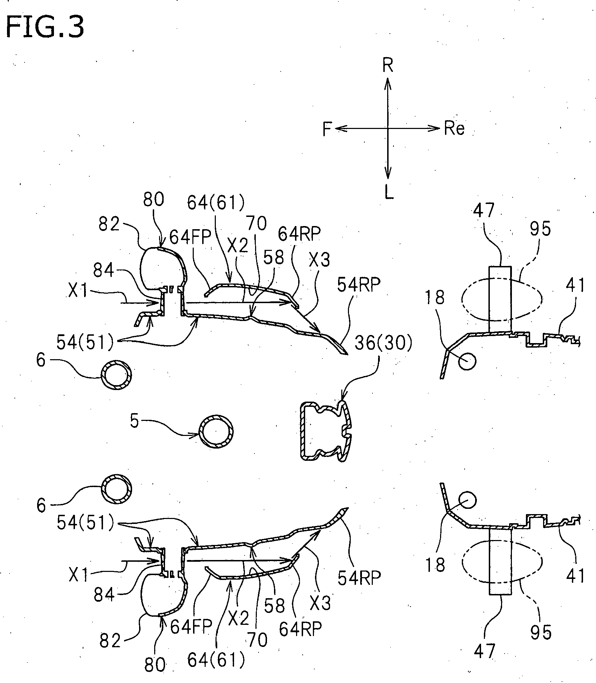

As illustrated in Fig. 1, a fuel tank 2 is disposed at the rear of the head pipe 5. The fuel tank 2 is supported by the main frame 12. A seat 3, which is for the rider to sit on, is disposed at the rear of the fuel tank 2. The seat 3 is positioned at the rear of the head pipe 5. The seat 3 is supported by the seat frame 16. The seat 3 is disposed above the seat frame 16. The seat 3 may be supported either directly or indirectly by the seat frame 16. Left and right body covers 41 are disposed downward relative to a portion of the fuel tank 2 and the seat 3. The right body cover 41 (see Fig. 3) is disposed to the right of the left body cover 41. The right body cover 41 is disposed downward relative to a portion of the fuel tank 2 and the seat 3.

The motorcycle 1 has an engine 30. The engine 30 has a crankcase 32, a cylinder body 34, a cylinder head 36, and a cylinder head cover 38. The cylinder body 34 extends upward from a front portion of the crankcase 32. The cylinder head 36 is disposed above the cylinder body 34 and joined to the cylinder body 34. The cylinder head cover 38 is disposed above the cylinder head 36 and joined to the cylinder head 36. The engine 30 is disposed below the fuel tank 2. The engine 30 is disposed at the rear of the head pipe 5. The engine 30 is disposed rearward relative to the first down frame 14. The engine 30 is positioned below the main frame 12. The engine 30 is positioned in front of the second down frame 18. The engine 30 is supported non-swingably by the body frame 10. In other words, the engine 30 is supported by the first down frame 14 and the second down frame 18. As illustrated in Fig. 3, the engine 30 is positioned laterally inward relative to a second vertical portion 64 of a second side cover 61, which will be described later.

As illustrated in Fig. 1, the motorcycle 1 has an exhaust pipe 90 and a silencer 92. The exhaust pipe 90 is connected to the engine 30. More specifically, the exhaust pipe 90 is connected to a front portion of the cylinder head 36. The exhaust pipe 90 extends rearward. More specifically, the exhaust pipe 90 has a first portion 90A extending frontward and obliquely downward from the cylinder head 36, a second portion 90B extending rearward and obliquely downward from the first portion 90A, and a third portion 90C extending rearward from the second portion 90B. The silencer 92 is connected to a rear end portion of the exhaust pipe 90.

The motorcycle 1 has a rear arm 22 coupled to the body frame 10. The rear arm 22 is positioned at the rear of the second down frame 18. The rear arm 22 is positioned below the backstay 20. The second down frame 18 and the rear arm 22 are coupled to each other via a pivot shaft 24. The rear arm 22 is coupled swingably to the second down frame 18. The rear arm 22 may be coupled swingably to the engine 30. A rear wheel 8 is supported rotatably at the rear end of the rear arm 22.

As illustrated in Fig. 2, the motorcycle 1 has left and right steps 47. The rider's feet are placed on the steps 47. The left step 47 extends leftward, and the right step 47 extends rightward. The steps 47 are formed in a rod-like shape. As illustrated in Fig. 1, each of the steps 47 is supported by a supporting frame 19 mounted to the second down frame 18. The steps 47 are positioned downward relative to the seat 3. The steps 47 are positioned rearward relative to the later-described second side covers 61. As illustrated in Fig. 3, the steps 47 are disposed laterally outward of the body cover 41.

As illustrated in Fig. 2, each of the left and right side covers 50 includes a first side cover 51 and a second side cover 61. The first side covers 51 are disposed laterally outward of the head pipe 5. The leftward first side cover 51 is disposed to the left of the head pipe 5. The rightward first side cover 51 is disposed to the right of the head pipe 5. The second side covers 61 are disposed laterally outward of the first side covers 51. The leftward second side cover 61 is disposed to the left of the leftward first side cover 51. The rightward second side cover 61 is disposed to the right of the rightward first side cover 51. The leftward first side cover 51 and the leftward second side cover 61 are disposed to the left of the front fork 6. The rightward first side cover 51 and the rightward second side cover 61 are disposed to the right of the front fork 6. In the present preferred embodiment, the left side cover 50 and the right side cover 50 have the same shape, but the teaching is not limited to such an embodiment. Hereinbelow, only the structure of the left side cover 50 will be described, and the description of the structure of the right side cover 50 will not be repeated.

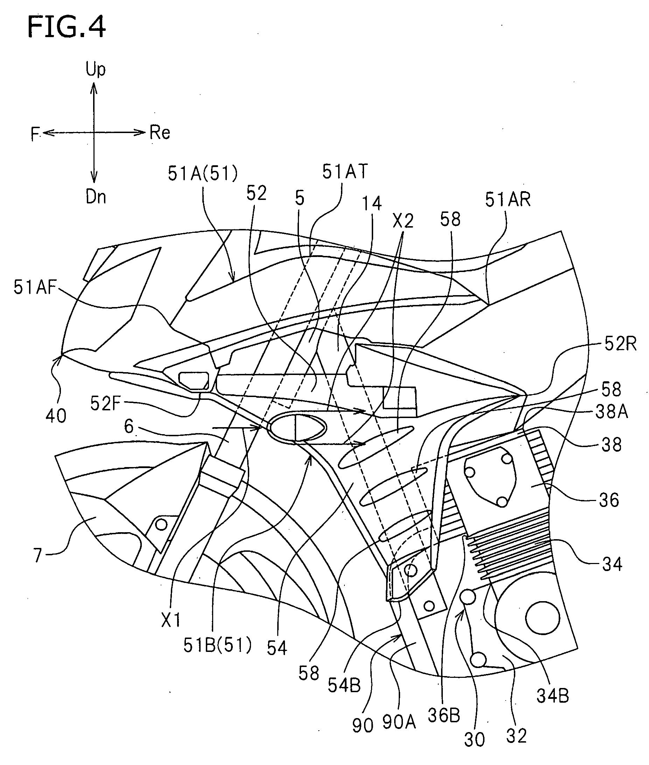

As illustrated in Fig. 4, the first side cover 51 includes a first upper side cover 51A and a first lower side cover 51B. The first upper side cover 51A and the first lower side cover 51 B are formed of different materials. The first upper side cover 51A and the first lower side cover 51 B may be formed of the same material. The first upper side cover 51A and the first lower side cover 51B may be integrated with each other. The first upper side cover 51A extends in a vehicle longitudinal direction. The first lower side cover 51 B is disposed below the first upper side cover 51A. The first lower side cover 51 B is attached to the first down frame 14. A front end 52F of the first lower side cover 51 B is positioned rearward relative to a front end 51AF of the first upper side cover 51A. A rear end 52R of the first lower side cover 51 B is positioned rearward relative to a rear end 51AR of the first upper side cover 51A. The first lower side cover 51B has a first horizontal portion 52, which extends in a vehicle longitudinal direction, and a first vertical portion 54, which extends downward from the first horizontal portion 52. The first horizontal portion 52 overlaps the front fork 6 as viewed from one side of the motorcycle. The first horizontal portion 52 overlaps the head pipe 5 as viewed from one side of the motorcycle. The first horizontal portion 52 overlaps the first down frame 14 as viewed from one side of the motorcycle. The first horizontal portion 52 is positioned upward relative to the cylinder head 36.

The first vertical portion 54 overlaps the first down frame 14 as viewed from one side of the motorcycle. The first vertical portion 54 overlaps a portion of the cylinder head 36 as viewed from one side of the motorcycle. The first vertical portion 54 overlaps the first portion 90A of the exhaust pipe 90 as viewed from one side of the motorcycle. A lower end 54B of the first vertical portion 54 is positioned downward relative to a lower end 36B of the cylinder head 36. The lower end 54B of the first vertical portion 54 is positioned downward relative to a lower end 34B of the cylinder body 34. The first vertical portion 54 is formed so that its length along the vehicle longitudinal direction is shorter toward the bottom.

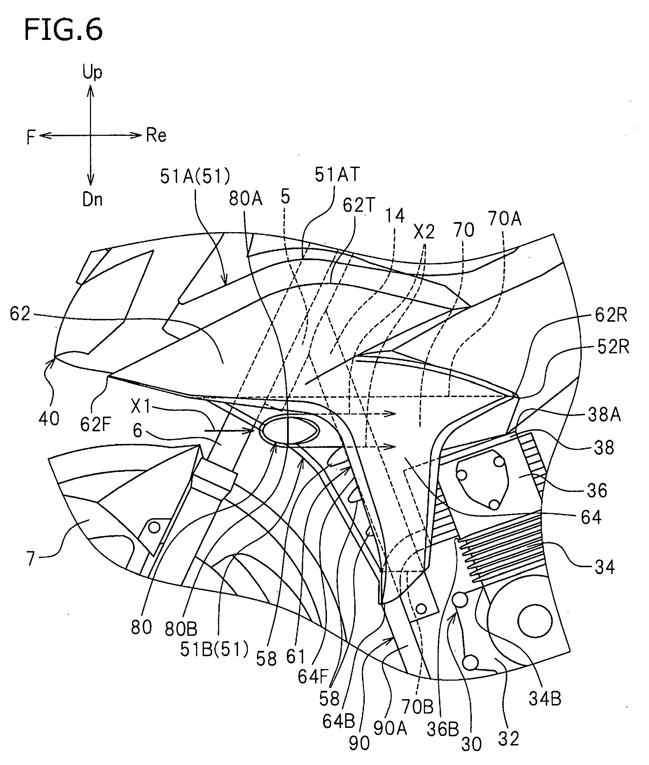

The first vertical portion 54 has a plurality of protruding portions 58. As illustrated in Fig. 2, the protruding portions 58 protrude laterally outward. As illustrated in Fig. 4, the protruding portions 58 extend in a vehicle longitudinal direction. Each of the protruding portions 58 is inclined with respect to the horizontal line so that its rear portion is positioned higher than its front portion. Each of the protruding portions 58 may be inclined with respect to the horizontal line so that its rear portion is positioned lower than its front portion. Each of the protruding portions 58 may not be inclined with respect to the horizontal line, and may be disposed along the horizontal direction. The protruding portions 58 overlap the first down frame 14 as viewed from one side of the motorcycle. A portion of each of the protruding portions 58 does not overlap the second vertical portion 64 (see Fig. 6) as viewed from one side of the motorcycle. It is possible that the entirety of each of the protruding portions 58 may overlap the second vertical portion 64 as viewed from one side of the motorcycle.

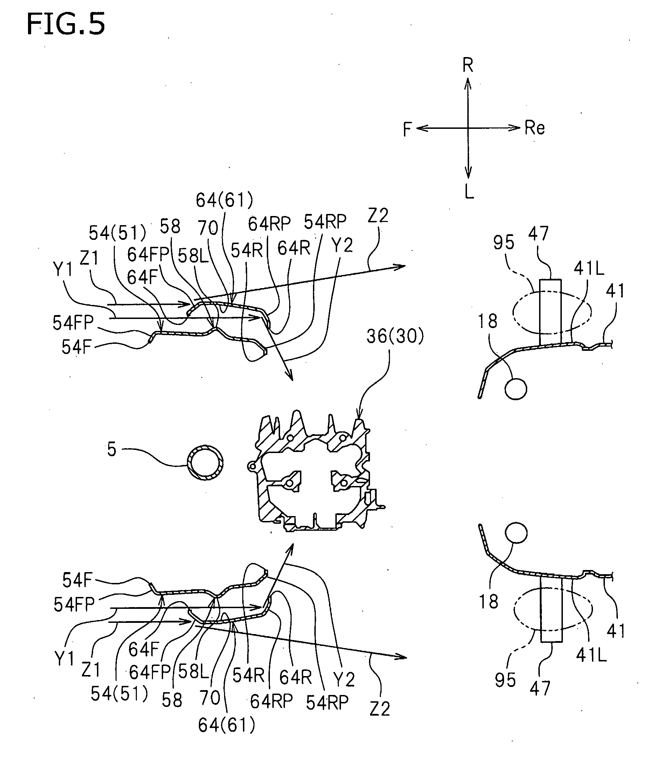

As illustrated in Fig. 5, a front portion 54FP of the first vertical portion 54 extends laterally inwardly in a horizontal cross-sectional plane across the first vertical portion 54. The front portion 54FP slopes laterally more inwardly toward the front. A rear portion 54RP of the first vertical portion 54 extends laterally inwardly in a horizontal cross-sectional plane across the first vertical portion 54. The rear portion 54RP slopes laterally more inwardly toward the rear. In a horizontal cross-sectional plane across the first vertical portion 54, a rear end 54R of the first vertical portion 54 is positioned laterally inward relative to a front end 54F of the first vertical portion 54. The first vertical portion 54 has the front end 54F that is positioned frontward relative to a front end 64F of the second vertical portion 64, which will be described later, in a horizontal cross-sectional plane across the first vertical portion 54. The first vertical portion 54 has the rear portion 54RP positioned laterally inward relative to a laterally outermost end 41 L of the body cover 41, in a horizontal cross-sectional plane across the first vertical portion 54 and the body cover 41.

As illustrated in Fig. 6, the second side cover 61 has a second horizontal portion 62, which extends in a vehicle longitudinal direction, and a second vertical portion 64, which extends downward from the second horizontal portion 62. The second horizontal portion 62 overlaps the first side cover 51 as viewed from one side of the motorcycle. The second horizontal portion 62 overlaps the first upper side cover 51A as viewed from one side of the motorcycle. The second horizontal portion 62 overlaps the first horizontal portion 52 (see Fig. 4) as viewed from one side of the motorcycle. The second horizontal portion 62 overlaps the front fork 6 as viewed from one side of the motorcycle. The second horizontal portion 62 overlaps the head pipe 5 as viewed from one side of the motorcycle. The second horizontal portion 62 overlaps the first down frame 14 as viewed from one side of the motorcycle. The second horizontal portion 62 is positioned upward relative to the cylinder body 34. A front end 62F of the second horizontal portion 62 is positioned frontward relative to the front end 52F (see Fig. 4) of the first horizontal portion 52. A rear end 62R of the second horizontal portion 62 is positioned frontward relative to the rear end 52R of the first horizontal portion 52. A top end 62T of the second horizontal portion 62 is positioned downward relative to a top end 51T of the first upper side cover 51A.

The second vertical portion 64 overlaps the first side cover 51 as viewed from one side of the motorcycle. The second vertical portion 64 overlaps the first lower side cover 51 B as viewed from one side of the motorcycle. The second vertical portion 64 overlaps the first vertical portion 54 (see Fig. 4) as viewed from one side of the motorcycle. The second vertical portion 64 overlaps the first down frame 14 as viewed from one side of the motorcycle. The second vertical portion 64 overlaps a portion of the cylinder head 36 as viewed from one side of the motorcycle. The second vertical portion 64 overlaps the first portion 90A of the exhaust pipe 90 as viewed from one side of the motorcycle. The second vertical portion 64 overlaps a portion of each of the protruding portions 58 as viewed from one side of the motorcycle. A lower end 64B of the second vertical portion 64 is positioned downward relative to the lower end 36B of the cylinder head 36. The lower end 64B of the second vertical portion 64 is positioned downward relative to the lower end 34B of the cylinder body 34. The second vertical portion 64 is formed so that its length along the vehicle longitudinal direction is shorter toward the bottom. The second vertical portion 64 has a portion in which its length along the vehicle longitudinal direction is shorter than the length of the first vertical portion 54 along the vehicle longitudinal direction.

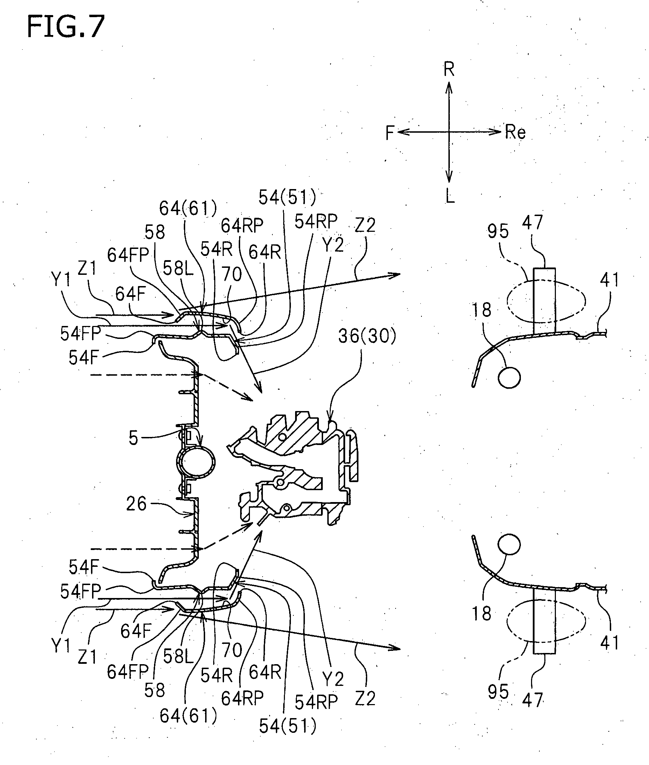

As illustrated in Fig. 7, a front portion 64FP of the second vertical portion 64 extends laterally inwardly in a horizontal cross-sectional plane across the second vertical portion 64. The front portion 64FP slopes laterally more inwardly toward the front. A rear portion 64RP of the second vertical portion 64 extends laterally inwardly in a horizontal cross-sectional plane across the second vertical portion 64. The rear portion 64RP slopes laterally more inwardly toward the rear. In a horizontal cross-sectional plane across the second vertical portion 64, a rear end 64R of the second vertical portion 64 is positioned laterally inward relative to the front end 64F of the second vertical portion 64. The second vertical portion 64 has the rear end 64R that is positioned rearward relative to the rear end 54R of the first vertical portion 54 in a horizontal cross-sectional plane across the second vertical portion 64. The second vertical portion 64 has the rear end 64R positioned laterally inward relative to a laterally outermost end 58L of the protruding portion 58 in a horizontal cross-sectional plane across the second vertical portion 64. The rear end 64R of the second vertical portion 64 may be positioned laterally outward relative to the outer end 58L of the protruding portion 58. As illustrated in Fig. 3, the second vertical portion 64 is positioned laterally outward relative to the body cover 41 in a horizontal cross-sectional plane across the second vertical portion 64 and the body cover 41.

As illustrated in Fig. 6, an airflow passage 70 for passing airflow is formed between the first side cover 51 and the second vertical portion 64. The airflow passage 70 for passing airflow is formed between the first lower side cover 51 B and the second vertical portion 64. The airflow passage 70 is formed between the first vertical portion 54 (see Fig. 4) of the first side cover 51 and the second vertical portion 64 of the second side cover 61. An upper end 70A of the airflow passage 70 is positioned upward relative to an upper end 38A of the cylinder head cover 38. A lower end 70B of the airflow passage 70 is positioned downward relative to the lower end 36B of the cylinder head 36.

As illustrated in Fig. 2, the motorcycle 1 has left and right flasher lamps 80. Each of the flasher lamps 80 has a lamp unit 82 and a coupling unit 84. The coupling unit 84 is positioned between the lamp unit 82 and the first side cover 51. The coupling unit 84 couples the lamp unit 82 and the first side cover 51 to each other. As illustrated in Fig. 6, each of the flasher lamps 80 is mounted to the first side cover 51 at a position at which the first side cover 51 and the second side cover 61 do not overlap as viewed from one side of the motorcycle. The flasher lamp 80 is fitted at a position in front of the second vertical portion 64. The flasher lamp 80 is positioned in front of the airflow passage 70. The flasher lamp 80 is disposed downward relative to the second horizontal portion 62. The flasher lamp 80 is positioned rearward relative to the front fork 6. The flasher lamp 80 is positioned frontward relative to the first down frame 14. The flasher lamp 80 is positioned frontward relative to the protruding portions 58. An upper end 80A of the flasher lamp 80 is positioned upward relative to the upper end 38A of the cylinder head cover 38. A lower end 80B of the flasher lamp 80 is positioned downward relative to the upper end 38A of the cylinder head cover 38. As illustrated in Fig. 2, the flasher lamp 80 overlaps the airflow passage 70 as viewed from the front of the motorcycle. At least a portion of the flasher lamp 80 is positioned laterally outward of the second side cover 61 as viewed from the front of the motorcycle. An outer end 80P of the left flasher lamp 80 is positioned leftward relative to the second side cover 61 as viewed from the front of the motorcycle. An outer end 80P of the right flasher lamp 80 is positioned rightward relative to the second side cover 61 as viewed from the front of the motorcycle.

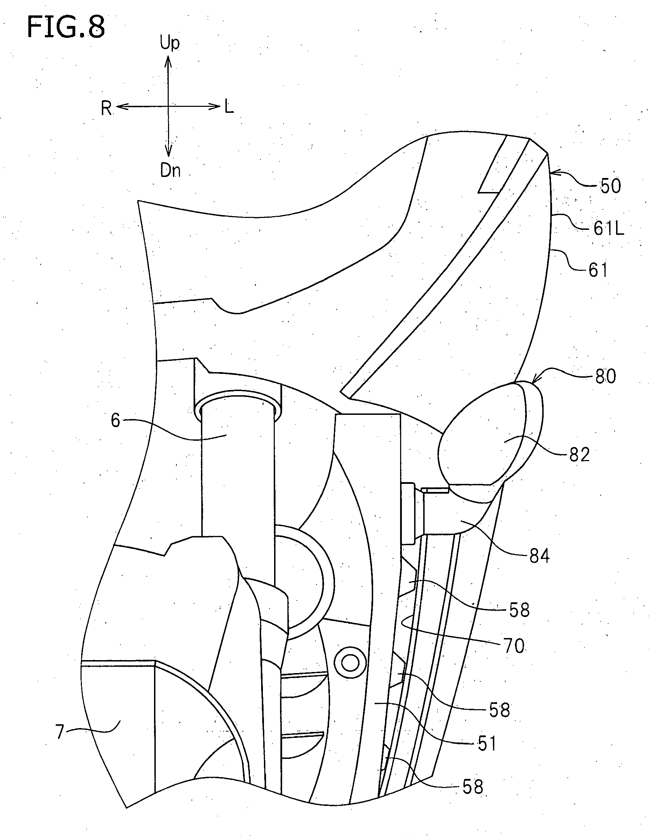

The coupling unit 84 of the flasher lamp 80 is formed so as to be bendable. Here, the term "bendable" means that the coupling unit 84 elastically deforms and bends when an external force acts on the coupling unit 84 and that the coupling unit 84 recovers the original shape when the external forces on the coupling unit 84 disappears. As illustrated in Fig. 8, when the coupling unit 84 is bent because an external force is applied to the coupling unit 84, the lamp unit 82 is positioned laterally inward relative to a laterally outermost end 61 L of the second side cover 61 as viewed from the front of the motorcycle. The lamp unit 82 reverts to the original position when the external force applied to the coupling unit 84.

Next, the flow of the airflow will be described. The airflow hits the flasher lamps 80 as indicated by arrows X1 in Fig. 3. The airflow that has hit the flasher lamp 80 causes turbulence at the rear of the flasher lamp 80. The turbulent airflow flows into the airflow passage 70, which is positioned to the rear of the flasher lamps 80, as indicated by arrows X2 in Fig. 6. The airflow is controlled in the airflow passage 70. The controlled airflow hits the rear portion 64RP (see Fig. 3) of the second vertical portion 64 and is guided laterally inward, as indicated by arrows X3 in Fig. 3. This can reduce the airflow that hits the rider's legs 95. In addition, under the flasher lamps 80, part of the airflow flows in the airflow passage 70 and hits the rear portion 64RP of the second vertical portion 64, as indicated by arrows Y1 in Fig. 5. The airflow that has hit the rear portion 64RP is guided laterally inward, as indicated by arrows Y2 in Fig. 5, and flows toward the engine 30. This makes it possible to reduce the airflow that hits the rider's legs 95 and also cool the engine 30. On the other hand, part of the airflow hits the front portion 64FP of the second vertical portion 64, as indicated by arrows Z1 in Fig. 5. Because the front portion 64FP slopes laterally more inwardly toward the front, the airflow that has hit the front portion 64FP flows outward of the second vertical portion 64, as indicated by arrows Z2 in Fig. 5. This can reduce the airflow that hits the rider's legs 95.

As described above, in the motorcycle 1, the flasher lamps 80 are positioned in front of the airflow passage 70 formed between the first side cover 51 and the vertical portion 64 of the second side cover 61, as illustrated in Fig. 6. Therefore, the turbulent airflow that occurs at the rear of the flasher lamps 80 is guided into the airflow passage 70, as indicated by arrows X2 in Fig. 6. The turbulent airflow is controlled while passing through the airflow passage 70. The controlled airflow, not the turbulent airflow, hits the rider's legs 95. As a result, riding comfort can be improved.

The flasher lamp 80 is fitted to the first side cover 51, which is disposed laterally inward relative to the second side cover 61. For this reason, the width of the motorcycle 1 can be kept less than that in the case where the flasher lamp 80 are mounted to the second side cover 61.

In the motorcycle 1 according to the present preferred embodiment, the engine 30 is position laterally inward relative to the second vertical portion 64, and the rear portion 64RP of the second vertical portion 64 extends laterally inward in a horizontal cross-sectional plane across the second vertical portion 64, as illustrated in Fig. 5. The airflow that has been controlled while passing through the airflow passage 70 hits the rear portion 64RP of the second vertical portion 64, as indicated by arrows Y1 in Fig. 5. Since the rear portion 64RP of the second vertical portion 64 extends laterally inward as viewed in plan of the motorcycle, the controlled airflow is guided laterally inward, as indicated by arrows Y2 in Fig. 5. This serves to reduce the airflow that hits the rider's legs 95 and to improve the riding comfort. In addition, the controlled airflow is guided to the engine 30 positioned laterally inward relative to the second vertical portion 64. As a result, the engine 30 can be cooled.

In the motorcycle 1 according to the present preferred embodiment, the rear end 64R of the second vertical portion 64 is positioned laterally inward relative to the front end 64F of the second vertical portion 64, as illustrated in Fig. 5. Therefore, a greater volume of airflow can be guided into the airflow passage 70. As a result, a greater volume of airflow can be guided to the engine 30, so the cooling performance for the engine 30 can be improved.

In the motorcycle 1 according to the present preferred embodiment, the lower end 64B of the second vertical portion 64 is positioned downward relative to the lower end 36B of the cylinder head 36, as illustrated in Fig. 6. Thereby, the vertical length of the airflow passage 70 is made relatively long, so a greater volume of airflow is allowed to pass through the airflow passage 70. As a result, a greater volume of airflow can be guided to the engine 30, so the cooling performance for the engine 30 can be improved.

In the motorcycle 1 according to the present preferred embodiment, the second vertical portion 64 overlaps the first down frame 14 as viewed from one side of the motorcycle. Thereby, the length of the airflow passage 70 along the vehicle longitudinal direction is made relatively long. As a result, the airflow passing through the airflow passage 70 is controlled more reliably. The controlled airflow is guided to the engine 30, so that it can cool the engine 30.

In the motorcycle 1 according to the present preferred embodiment, the second vertical portion 64 has the rear end 64R that is positioned rearward relative to the rear end 54R of the first vertical portion 54, as illustrated in Fig. 5. The airflow that has passed through the airflow passage 70 and has hit the rear portion 64RP of the second vertical portion 64 of the second side cover 61 is guided laterally inward more reliably, as indicated by arrows Y2 in Fig. 5. This can reduce the airflow that hits the rider's legs 95. Moreover, because the airflow can be guided to the engine 30 more reliably, the cooling performance for the engine 30 can be improved.

In the motorcycle 1 according to the present preferred embodiment, the first vertical portion 54 has the protruding portions 58 each protruding laterally outward and extending in a vehicle longitudinal direction, and at least a portion of each of the projecting portions 58 overlaps the second vertical portion 64 as viewed from one side of the motorcycle, as illustrated in Fig. 6. Thereby, the turbulent airflow that is caused at the rear of the flasher lamp 80 is controlled by the protruding portions 58 positioned in the airflow passage 70. This allows the controlled airflow to hit the rider's legs 95 and improves the riding comfort.

In the motorcycle 1 according to the present preferred embodiment, the rear end 64R of the second vertical portion 64 is positioned laterally inward relative to the laterally outermost end 58L of the protruding portions 58, as illustrated in Fig. 5. This allows the airflow that has been controlled by the protruding portions 58 to be guided laterally inward. As a result, the airflow that hits the rider's legs 95 can be reduced. The riding comfort can also be improved.

In the motorcycle 1 according to the present preferred embodiment, the second vertical portion 64 is positioned laterally outward relative to the body cover 41 in a horizontal cross-sectional plane across the second vertical portion 64 and the body cover 41, as illustrated in Fig. 3. As a result, the airflow passing along the region laterally outward of the second vertical portion 64 does not hit the rider's legs 95 easily.

In the motorcycle 1 according to the present preferred embodiment, at least a portion of the first vertical portion 54 is positioned laterally inward relative to the laterally outermost end 41 L of the body cover 41, in a horizontal cross-sectional plane across the first vertical portion 54 and the body cover 41, as illustrated in Fig. 5. As a result, the airflow passing through the airflow passage 70 is guided laterally inward. As a result, the airflow does not hit the rider's legs easily.

In the motorcycle 1 according to the present preferred embodiment, the front portion 64FP of the second vertical portion 64 extends laterally more inwardly toward its front, in a horizontal cross-sectional plane across the second vertical portion 64, as illustrated in Fig. 5. The airflow that flows from the front of the second vertical portion 64 of the second side cover 61 toward the second vertical portion 64 hits the front portion 64FP of the second vertical portion 64. For this reason, the airflow that has hit the front portion 64FP of the second vertical portion 64 flows outward of the second vertical portion 64, in other words, in the laterally opposite direction to the first side cover 51, as indicated by arrows Z2 in Fig. 5. This can reduce the airflow that hits the rider's legs 95.

In the motorcycle 1 according to the present preferred embodiment, when the coupling unit 84 is bent, the lamp unit 82 is positioned laterally inward relative to the laterally outermost end 61 L of the second side cover 61 as viewed from the front of the motorcycle, as illustrated in Fig. 8. With this structure, the coupling unit 84 can bend when a sideward force is applied to the motorcycle 1. Because the coupling unit 84 can bend, the lamp unit 82 can be positioned laterally inward relative to the laterally outermost end 61 L of the second side cover 61. Therefore, the sideward force is distributed over the second side cover 61, and the force applied to the flasher lamp 80 is reduced. This can prevent the lamp unit 82 from damages.

### REFERENCE SIGNS LIST

- 5: Head pipe
- 14: First down frame
- 34: Cylinder body
- 36: Cylinder head
- 50: Side cover
- 51: First side cover
- 54: First vertical portion
- 58: Protruding portion
- 61: Second side cover
- 64: Second vertical portion
- 70: Airflow passage
- 80: Flasher lamp

## Claims

1. A motorcycle (1) comprising:
a head pipe (5);
a body frame (10) extending rearward from the head pipe (5);
a seat (3), positioned behind the head pipe (5), for a rider to sit on;
a first side cover (51) disposed laterally outward of the head pipe (5);
a second side cover (61) comprising a vertical portion (64) extending downward and overlapping the first side cover (51) as viewed from one side view of the motorcycle, the second side cover (61) disposed laterally outward of the first side cover (51);
a flasher lamp (80) mounted at a position that is frontward relative to the vertical portion (64) at which the first side cover (51) and the second side cover (61) do not overlap each other as viewed from one side view of the motorcycle, at least a portion of the flasher lamp (80) being disposed laterally outward of the second side cover (61) as viewed from the front of the motorcycle;
a step (47), positioned downward relative to the seat (3) and rearward relative to the second side cover (61), on which a foot of the rider is to be placed; and
an airflow passage (70), formed between the first side cover (51) and the vertical portion (64), for passing airflow therethrough, **characterized in that**
the flasher lamp (80) is mounted to the first side cover (51), and the flasher lamp (80) is positioned in front of the airflow passage (70) and overlaps the airflow passage (70) as viewed from the front of the motorcycle, such that a turbulent airflow that occurs at a rear of the flasher lamp (80) is guided into the airflow passage (70).

2. A motorcycle according to claim 1, **characterized by:**
an engine (30) positioned behind the head pipe (5) and supported by the body frame (10), wherein the engine (30) is positioned laterally inward relative to the vertical portion (64); and
a rear portion (64RP) of the vertical portion (64) extends laterally inward in a horizontal cross-sectional plane across the vertical portion (64).

3. A motorcycle according to claim 2, **characterized in that** a rear end (64R) of the vertical portion (64) is positioned laterally inward relative to a front end (64F) of the vertical portion (64).

4. A motorcycle according to claim 2 or 3, **characterized in that** the engine (30) comprises a crankcase (32), a cylinder body (34) extending upward from the crankcase (32), and a cylinder head (36) connected to the cylinder body (34); and
a lower end (64B) of the vertical portion (64) is positioned downward relative to a lower end (36B) of the cylinder head (36).

5. A motorcycle according to any one of claims 2 to 4, **characterized in that** the vertical portion (64) overlaps a portion (14) of the body frame (10) that is positioned in front of the engine (30) as viewed from one side view of the motorcycle.

6. A motorcycle according to any one of claims 2 to 5, **characterized in that** the first side cover (51) further comprises another vertical portion (54) overlapping the vertical portion (64) as viewed from one side view of the motorcycle; and
the vertical portion (64) includes a rear end (64R) positioned rearward relative to a rear end (54R) of the other vertical portion (54).

7. A motorcycle according to claim 6, **characterized in that** the other vertical portion (54) includes a protruding portion (58) protruding laterally outward and extending in a vehicle longitudinal direction; and
at least a portion of the protruding portion (58) overlaps the vertical portion (64) as viewed from one side view of the motorcycle.

8. A motorcycle according to claim 7, **characterized in that** the rear end (64R) of the vertical portion (64) is positioned laterally inward relative to a laterally outermost end (58L) of the protruding portion (58).

9. A motorcycle according to any one of claims 6 to 8, **characterized by** a body cover (41) disposed laterally inward of the step (47), wherein the vertical portion (64) is positioned laterally outward relative to the body cover (41) in a horizontal cross-sectional plane across the vertical portion (64) and the body cover (41).

10. A motorcycle according to claim 9, **characterized in that,** in a horizontal cross-sectional plane across the other vertical portion (54) and the body cover (41), at least a portion of the other vertical portion (54) is positioned laterally inward relative to a laterally outermost end (41L) of the body cover (41).

11. A motorcycle according to any one of claims 1 to 10, **characterized in that** a front portion (64FP) of the vertical portion (64) extends laterally more inwardly toward its front in a horizontal cross-sectional plane across the vertical portion (64).

12. A motorcycle according to any one of claims 1 to 11, **characterized in that** the flasher lamp (80) comprises a lamp unit (82), and a coupling unit (84), disposed between the lamp unit (82) and the first side cover (51), and coupling the lamp unit (82) and the first side cover (51);
the coupling unit (84) is bendable; and
when the coupling unit (84) is bent, the lamp unit (82) is positioned laterally inward relative to a laterally outermost end (61 L) of the second side cover (61) as viewed from the front of the motorcycle.

## Patentansprüche

1. Ein Motorrad (1), das umfasst:
ein Kopf-Rohr (5);
einen Körper-Rahmen (10), der sich nach hinten von dem Kopf-Rohr (5) erstreckt;
einen Sitz (3), positioniert hinter dem Kopf-Rohr (5) für einen Fahrer, um darauf zu sitzen;
eine erste Seitenabdeckung (51), positioniert seitlich außerhalb von dem Kopf-Rohr (5);
eine zweite Seitenabdeckung (61), die einen vertikalen Abschnitt (64) umfasst, der sich nach unten erstreckt und die erste Seitenabdeckung (51) überlappt, wenn von einer Seitenansicht des Motorrads betrachtet, die zweite Seitenabdeckung (61) ist seitlich außerhalb von der ersten Seitenabdeckung (51) positioniert;
eine erste Blinkerleuchte (80), montiert an einer Position, die vor relativ zu dem vertikalen Abschnitt (64) ist, an dem die erste Seitenabdeckung (51) und die zweite Seitenabdeckung (61) sich nicht miteinander überlappen, wenn in einer Seitenansicht des Motorrades betrachtet, zumindest ein Abschnitt der Blinkerleuchte (80) ist seitlich außerhalb von der zweiten Seitenabdeckung (61) positioniert, wenn von vorne von dem Motorrad betrachtet;
eine Stufe (74), positioniert unterhalb relativ zu dem Sitz (3) und hinter relativ zu der zweiten Seitenabdeckung (61), auf welcher ein Fuß des Fahrers zu platzieren ist; und
ein Luftstrom-Durchgang (70), ausgebildet zwischen der ersten Seitenabdeckung (51) und dem vertikalen Abschnitt (64) zum Hindurchtreten eines Luftstroms, **dadurch gekennzeichnet, dass**
die Blinkerleuchte (80) an der ersten Seitenabdeckung (51) montiert ist, und die Blinkerleuchte (80) ist vor dem Luftstrom-Durchgang (79) positioniert und überlappt den Luftstrom-Durchgang (70), wenn von vorne von dem Motorrad betrachtet, so dass ein turbulenter Luftstrom, der hinter der Blinkerleuchte (80) auftritt in dem Luftstrom-Durchgang (70) geführt ist.

2. Ein Motorrad gemäß Anspruch 1 **gekennzeichnet durch:**
einen Motor (30), positioniert hinter dem Kopf-Rohr (50) und gelagert **durch** den Körper-Rahmen (10), wobei der Motor (30) seitlich innerhalb relativ zu dem vertikalen Abschnitt (64) positioniert ist; und
einen hinteren Abschnitt (64RP) des vertikalen Abschnitts (64), der sich seitlich nach innen in einer horizontalen Querschnittsebene, quer zu dem vertikalen Abschnitt (64), erstreckt.

3. Ein Motorrad gemäß Anspruch 2, **dadurch gekennzeichnet, dass** ein hinteres Ende (64R) des vertikalen Abschnitts (64) seitlich nach innen relativ zu einem vorderen Ende (64F) des vertikalen Abschnitts (64) positioniert ist.

4. Ein Motorrad gemäß Anspruch 2 oder 3, **dadurch gekennzeichnet, dass** der Motor (30) ein Kurbelgehäuse (32), einen Zylinderkörper (34), der sich nach oben von dem Kurbelgehäuse (32) erstreckt, und einen Zylinderkopf (36), verbunden mit dem Zylinderkörper (34), umfasst; und
ein unteres Ende (64B) des vertikalen Abschnitts (64) ist nach unten relativ zu dem unteren Ende (36B) des Zylinderkopfs (36) positioniert.

5. Ein Motorrad gemäß irgendeinem der Ansprüche 2 bis 4, **dadurch gekennzeichnet, dass** der vertikale Abschnitt (64) einen Abschnitt (14) des Körper-Rahmens (10) überlappt, der vor dem Motor (30), wenn von einer Seitenansicht des Motorrads betrachtet.

6. Ein Motorrad gemäß irgendeinem der Ansprüche 2 bis 5, **dadurch gekennzeichnet, dass** die erste Seitenabdeckung (51) weiterhin einen anderen vertikalen Abschnitt (54) umfasst, welcher den vertikalen Abschnitt (64) überlappt, wenn von einer Seitenansicht des Motorrads betrachtet; und
der vertikale Abschnitt (64) ein hinteres Ende (64R) beinhaltet, positioniert hinter relativ zu einem hinteren Ende (54R) des anderen vertikalen Abschnitts (54).

7. Ein Motorrad gemäß Anspruch 6, **dadurch gekennzeichnet, dass** der andere vertikale Abschnitt (54) einen vorspringenden Abschnitt (58) beinhaltet, der seitlich nach außen vorspringt und sich in eine Fahrzeuglängsrichtung erstreckt; und zumindest ein Abschnitt des vorspringenden Abschnitts (58) den vertikalen Abschnitt (64) überlappt, wenn von einer Seitenansicht des Motorrads betrachtet.

8. Ein Motorrad gemäß Anspruch 7, **dadurch gekennzeichnet, dass** das hintere Ende (64R) des vertikalen Abschnitts (64) seitlich nach innen relativ zu einem seitlich äußersten Ende (58L) des vorspringenden Abschnitts (58) positioniert ist.

9. Ein Motorrad gemäß irgendeinem der Ansprüche 6 bis 8, **gekennzeichnet durch** eine Körperabdeckung (41), die seitlich nach innen von der Stufe (74) positioniert ist, wobei der vertikale Abschnitt (64) seitlich nach außen relativ zu der Körperabdeckung (41) in eine horizontale Querschnittsebene quer zu dem vertikalen Abschnitt (64) und der Körperabdeckung (41) positioniert ist.

10. Ein Motorrad gemäß Anspruch 9, **dadurch gekennzeichnet, dass** in einer horizontalen Querschnittsebene, quer zu dem anderen vertikalen Abschnitt (54) und der Körperabdeckung (41), zumindest ein Abschnitt des anderen vertikalen Abschnitts (54) seitlich nach innen relativ zu einem seitlich äußersten Ende (41 L) der Körperabdeckung (41) positioniert ist.

11. Ein Motorrad gemäß irgendeinem der Ansprüche 1 bis 10, **dadurch gekennzeichnet, dass** ein vorderer Abschnitt (64FP) des vertikalen Abschnitts (64) sich seitlich mehr nach innen zu dessen Front in eine horizontale Querschnittsebene, quer zu dem vertikalen Abschnitt (64), erstreckt.

12. Ein Motorrad gemäß irgendeinem der Ansprüche 1 bis 11, **dadurch gekennzeichnet, dass** die Blinkerleuchte (80) eine Leuchteneinheit (82) und eine Kopplungseinheit (84), die zwischen der Leuchteneinheit (82) und der ersten Seitenabdeckung (51) positioniert ist, umfasst, und die Leuchteneinheit (82) und die erste Seitenabdeckung (51) koppelt;
die Kopplungseinheit (84) ist biegbar; und
wenn die Kopplungseinheit (84) gebogen ist, ist die Leuchteneinheit (82) seitlich nach innen relativ zu einem seitlich äußersten Ende (61 L) der zweiten Seitenabdeckung (61) positioniert, wenn von vorne von dem Motorrad betrachtet.

## Revendications

1. Motocyclette (1) comprenant :
un tube de tête (5) ;
un cadre de corps (10) s'étendant vers l'arrière du tube de tête (5) ;
un siège (3) positionné derrière le tube de tête (5) pour qu'un conducteur s'y asseye ;
un premier couvercle latéral (51) disposé latéralement vers l'extérieur du tube de tête (5) ;
un second couvercle latéral (61) comprenant une partie verticale (64) s'étendant vers le bas et recouvrant le premier couvercle latéral (51), vu d'une vue de côté de la motocyclette, le second couvercle latéral (61) étant disposé latéralement vers l'extérieur du premier couvercle latéral (51) ;
un feu clignotant (80) monté dans une position qui est en avant par rapport à la partie verticale (64) au niveau de laquelle le premier couvercle latéral (51) et le second couvercle latéral (61) ne se recouvrent pas mutuellement, vu d'une vue de côté de la motocyclette, au moins une partie du feu clignotant (80) étant disposée latéralement vers l'extérieur du second couvercle latéral (61), vu de l'avant de la motocyclette ;
une marche (47), positionnée vers le bas par rapport au siège (3) et vers l'arrière par rapport au second couvercle latéral (61), sur laquelle doit être placé un pied du conducteur ; et
un passage d'écoulement d'air (70), formé entre le premier couvercle latéral (51) et la partie verticale (64), pour faire passer un écoulement d'air à travers celui-ci, **caractérisé en ce que**
le feu clignotant (80) est monté sur le premier couvercle latéral (51) et le feu clignotant (80) est positionné devant le passage d'écoulement d'air (70) et recouvre le passage d'écoulement d'air (70), vu de l'avant de la motocyclette, de sorte qu'un écoulement d'air turbulent se produisant à l'arrière du feu clignotant (80) est guidé dans le passage d'écoulement d'air (70).

2. Motocyclette selon la revendication 1, **caractérisée par** :
un moteur (30) positionné derrière le tube de tête (5) et supporté par le cadre de corps (10), dans lequel le moteur (30) est positionné latéralement vers l'intérieur par rapport à la partie verticale (64) ; et
la partie arrière (64RP) de la partie verticale (64) s'étend latéralement vers l'intérieur dans un plan en coupe horizontale à travers la partie verticale (64).

3. Motocyclette selon la revendication 2, **caractérisée en ce que** l'extrémité arrière (64R) de la partie verticale (64) est positionnée latéralement vers l'intérieur par rapport à l'extrémité avant (64F) de la partie verticale (64).

4. Motocyclette selon la revendication 2 ou 3, **caractérisée en ce que** le moteur (30) comprend un carter (32), un corps de cylindre (34) s'étendant vers le haut par rapport au carter (32) et une culasse (36) reliée au corps de cylindre (34) ; et
l'extrémité inférieure (64B) de la partie verticale (64) est positionnée vers le bas par rapport à l'extrémité inférieure (36B) de la culasse (36).

5. Motocyclette selon l'une quelconque des revendications 2 à 4, **caractérisée en ce que** la partie verticale (64) recouvre une partie (14) du cadre de corps (10) qui est positionnée devant le moteur (30), vu d'une vue de côté de la motocyclette.

6. Motocyclette selon l'une quelconque des revendications 2 à 5, **caractérisée en ce que** le premier couvercle latéral (51) comprend en outre une autre partie verticale (54) recouvrant la partie verticale (64), vue d'une vue latérale de la motocyclette ; et
la partie verticale (64) possède une extrémité arrière (64R) positionnée vers l'arrière par rapport à l'extrémité arrière (54R) de l'autre partie verticale (54).

7. Motocyclette selon la revendication 6, **caractérisée en ce que** l'autre partie verticale (54) comporte une partie en saillie (58) faisant saillie latéralement vers l'extérieur et s'étendant dans la direction longitudinale du véhicule ; et
au moins une partie de la partie en saillie (58) recouvre la partie verticale (64), vue d'une vue de côté de la motocyclette.

8. Motocyclette selon la revendication 7, **caractérisée en ce que** l'extrémité arrière (64R) de la partie verticale (64) est positionnée latéralement vers l'intérieur par rapport à l'extrémité latéralement la plus externe (58L) de la partie en saillie (58).

9. Motocyclette selon l'une quelconque des revendications 6 à 8, **caractérisée par** un couvercle de corps (41) disposé latéralement vers l'intérieur de la marche (47), dans lequel la partie verticale (64) est positionnée latéralement vers l'extérieur par rapport au couvercle de corps (41) dans un plan en coupe horizontale à travers la partie verticale (64) et le couvercle de corps (41).

10. Motocyclette selon la revendication 9, **caractérisée en ce que**, dans un plan en coupe horizontale à travers l'autre partie verticale (54) et le couvercle de corps (41), au moins une partie de l'autre partie verticale (54) est positionnée latéralement vers l'intérieur par rapport à l'extrémité latéralement la plus externe (41L) du couvercle de corps (41).

11. Motocyclette selon l'une quelconque des revendications 1 à 10, **caractérisée en ce que** la partie avant (64FP) de la partie verticale (64) s'étend latéralement plus vers l'intérieur vers l'avant de celle-ci dans un plan en coupe horizontale à travers la partie verticale (64).

12. Motocyclette selon l'une quelconque des revendications 1 à 11, **caractérisée en ce que** le feu clignotant (80) comprend une unité de lampe (82) et une unité de couplage (84) disposée entre l'unité de lampe (82) et le premier couvercle latéral (51) et couplant l'unité de lampe (82) et le premier couvercle latéral (51) ;
l'unité de couplage (84) est pliable ; et
lorsque l'unité de couplage (84) est pliée, l'unité de lampe (82) est positionnée latéralement vers l'intérieur par rapport à l'extrémité latéralement la plus externe (61L) du second couvercle latéral (61), vue de l'avant de la motocyclette.
